# EUROPEAN PATENT APPLICATION

(11) **EP 1 926 328 A2**
(43) Date of publication of application: **28.05.2008**
(21) Application number: 07113474.6
(22) Date of filing: 31.07.2007
(51) Int. Cl.: H04Q 7/20

(54) **Apparatus and method for the diffusion of voice messages relating to sites, such as museums, parks, places of public interest, etc.**

(30) Priority: 23.11.2006 IT UD20060243
(71) Applicant: EUROTECH SpA, 33020 Amaro (UD) (IT)
(72) Inventor: Siagri, Roberto, 33011 Artegna (UD) (IT); Chialina, Silvano, 33028 Tolmezzo (UD) (IT)
(74) Representative: Petraz, Gilberto Luigi

(57) **Abstract**

Apparatus (10) for the diffusion of voice messages relating to sites, such as museums, parks, places of public interest etc., comprising one or more fixed transmitter units (12) each provided with respective electronic memorization members, in which a corresponding voice message is memorized and each suitable to transmit the respective voice message, wherein said respective voice message refers to the site in which the corresponding fixed transmitter unit (12) is disposed; and one or more mobile receiver units (14) each suitable to receive at least a voice message from a respective fixed transmitter unit (12). Each fixed transmitter unit (12) is pre-disposed so that the corresponding voice message is memorized in the respective electronic memorization members in compressed form. Each mobile receiver unit (14) is provided with decompression members (38) able to decompress the voice message received so as to obtain a message reproducible in a comprehensible and intelligible manner.

## Description

### FIELD OF THE INVENTION

The present invention concerns an apparatus and method for the diffusion of voice messages relating to sites, such as museums, parks, places of public interest, etc., between one or more fixed transmitter units and one or more mobile receiver units. In particular, the present invention can be used to diffuse, to the visitors of a defined place or to the participants at a specific event, voice messages containing useful information or news concerning monuments, works of art, events, places or other. The present invention is also particularly indicated for the diffusion of information inside places of tourist interest, such as for example museums, religious buildings, zoological gardens etc., but can also be adopted as a general guide device for visiting cities or country-side, archeological areas, botanical gardens, exhibitions, musical events or other.

### BACKGROUND OF THE INVENTION

Systems are known for diffusing voice messages, for example of the tourist, naturalistic, geological, historical or other type, which use fixed units disposed in correspondence with the site of interest and provided with a memory in which a specific message relating to the site is memorized.

Known systems also use mobile units, which can be used by users and provided with loudspeakers or headphones to reproduce the voice messages that are transmitted via radio by the fixed units.

The mobile units are provided with a transceiver suitable to transmit, to a mating transceiver of a fixed unit, a signal that indicates the presence and proximity of the mobile unit with respect to the fixed unit. When the fixed unit receives the signal, it is activated and transmits the corresponding voice message to the mobile unit.

The messages memorized in the memories are, however, defined numerical signals, sampling and quantizing an audio signal, for example with a sampling frequency of 16 kHz and with 8 quantization bits.

For a voice message lasting 100 seconds, the message has a size of about 1.5 MByte, whereas for a message of 1000 seconds the message has a size of about 15 MByte, and so on.

However, this entails both the need to assemble in each fixed unit a memory of great size, so that the voice message can be memorized in its entirety, and also a long time to transmit the message to the mobile units.

One disadvantage of known systems is therefore that the fixed units have a high energy absorption and need either a specific connection to the electricity supply network, or frequent replacements of the batteries. The fixed units of known systems can therefore be positioned either in places served by the electricity supply network or in easily reachable places so that the batteries can be frequently replaced.

Purpose of the present invention is to achieve an apparatus and perfect a method that allow to diffuse voice messages relating to sites, such as museums, parks, places of public interest, etc., between one or more fixed units and one or more mobile units, wherein the fixed units guarantee a correct and complete transmission of the voice messages to the mobile units, with reduced energy consumption, so that they are able to be installed in places not served by the electricity supply network or in places not easily reached.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purpose, an apparatus according to the present invention is able to be used for the diffusion of voice messages relating to sites, such as museums, parks, places of public interest, etc.

According to the present invention, the apparatus comprises one or more fixed transmitter units each provided with respective electronic memorization means in which a corresponding voice message is memorized, and each suitable to transmit the respective voice message. The message refers to the site where the corresponding fixed transmitter unit is disposed.

According to the present invention, the apparatus also comprises one or more mobile receiver units each suitable to receive at least a voice message from a respective fixed transmitter unit.

According to a characteristic feature of the present invention, each of the fixed transmitter units is pre-disposed so that the corresponding voice message is memorized in the respective electronic memorization means in compressed form, and each of the mobile receiver units is provided with decompression means able to decompress the voice message received, in order to obtain a message able to be reproduced in a manner comprehensible and intelligible to the user.

The compression of the voice messages allows to reduce both the size of the memory in each fixed transmitter unit and also the duration of transmission of the individual message, while guaranteeing a correct and complete transmission of the voice messages to the mobile receiver units.

In fact, given the same level of intelligibility with respect to messages transmitted by known systems, a compressed voice message with a duration of about 100 or more seconds can have a size comprised between about 10 Byte and about 100 Byte, instead of 1.5 MByte or 15 MByte.

In this way, the present invention guarantees a very low energy consumption by the fixed transmitter units, which can thus be installed in places not served by the electricity supply network or in places not easily reachable by workers.

According to one solution of the present invention, each fixed transmitter unit comprises at least a transponder and each mobile receiver unit comprises means to generate an electromagnetic field able to activate the transponder, when it is in proximity with the latter. In this way, activating the transponder of the fixed unit by its own generation means, the mobile unit is able to supply electric energy to the various electric and electronic components of the respective fixed transmitter unit, allowing the transmission of the respective voice message.

In this way the present invention allows to use passive fixed units, substantially without any means of feed, except that provided by the mobile unit.

According to a variant of the present invention, each of the fixed transmitter units comprises autonomous feed means, for example batteries, and transmission means fed by the feed means and able to transmit the voice message at determinate periods. In particular, the ratio between the duration of the transmission of the voice message and the period between one transmission and the subsequent transmission is comprised between about 100 and about 10000, advantageously between about 1000 and about 5000. This guarantees that the consumption of the fixed units is greatly reduced thanks to the fact that they transmit very short packets containing the message via radio in periodic mode.

According to another variant of the present invention, each of the fixed transmitter units comprises both feed means and also means to generate an electromagnetic field.

Thanks to the feed means, the fixed transmitter units are autonomous from the energy point of view, but are activated only when the generation means of the mobile receiver unit is in proximity with the transponder, allowing to transmit messages only in this circumstance and thus further reducing energy consumption.

According to the present invention, the low energy consumption by the fixed units allows to use the apparatus, for example, in very extensive places (shows, exhibitions, fairs) or in places outdoors (parks, gardens, etc.).

According to the present invention, the voice messages are compressed in adaptive mode, for example according to the coding Adaptive Differential PCM (ADPCM), or similar coding, by means of a voice encoder, for example of the type able to analyze the voice signal according to linear predicting coding, or similar coding, or according to any other protocol, for example of the MPEG family, in particular Layer 3 of MPEG 1 protocol (MP3).

In accordance with the above purpose, the present invention also concerns a method for the diffusion of voice messages relating to sites, such as museums, parks, places of public interest, etc., by means of one or more fixed transmitter units each provided with respective electronic memorization means in which a corresponding voice message is memorized, and each suitable to transmit the respective voice message, and by means of one or more mobile receiver units, each suitable to receive at least a voice message from a respective fixed transmitter unit.

According to another characteristic feature of the present invention, each voice message is memorized in compressed form in the respective electronic memorization means of each fixed transmitter unit, and the voice message received by each mobile receiver unit is decompressed by means of decompression means in order to obtain a message reproducible in a manner comprehensible and intelligible to the user.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 is a schematic view of an apparatus for the diffusion of voice messages according to the present invention;
- fig. 2 is a schematic view of a fixed transmitter unit of the apparatus in fig. 1;
- fig. 3 is a schematic view of a mobile receiver unit of the apparatus in fig. 1;
- fig. 4 is a three-dimensional view of the mobile receiver unit in fig. 3;
- fig. 5 is a three-dimensional view of the fixed transmitter unit in fig. 2; and
- fig. 6 is a schematic view of a variant of the fixed transmitter unit in fig. 2.

### DETAILED DESCRIPTION OF A PREFERENTIAL FORM OF EMBODIMENT

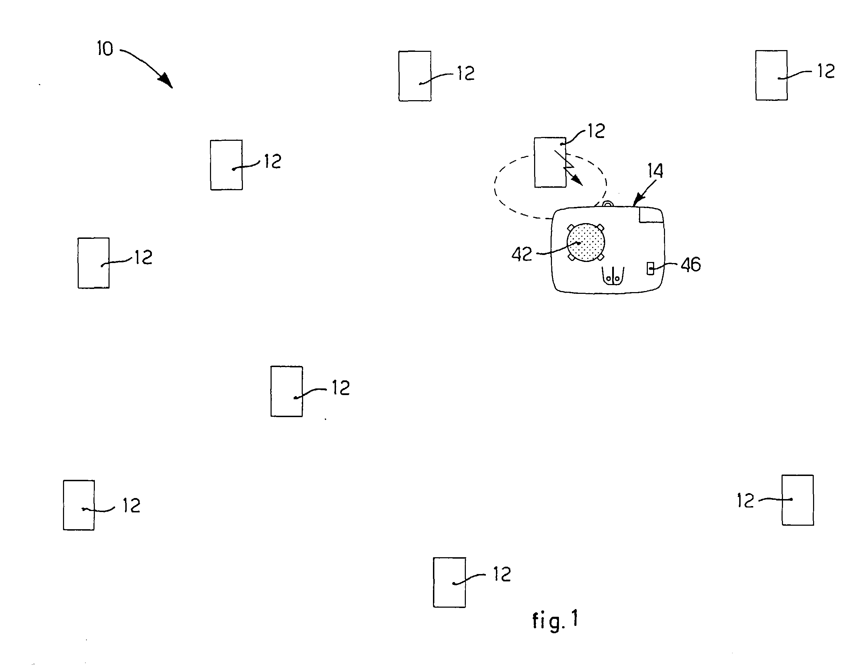

With reference to fig. 1, an apparatus 10 according to the present invention is used for diffusing voice messages.

The apparatus 10 comprises a plurality of fixed transmitter units 12 and a plurality of mobile receiver units 14, of which only one is shown here, each able to be associated with a user.

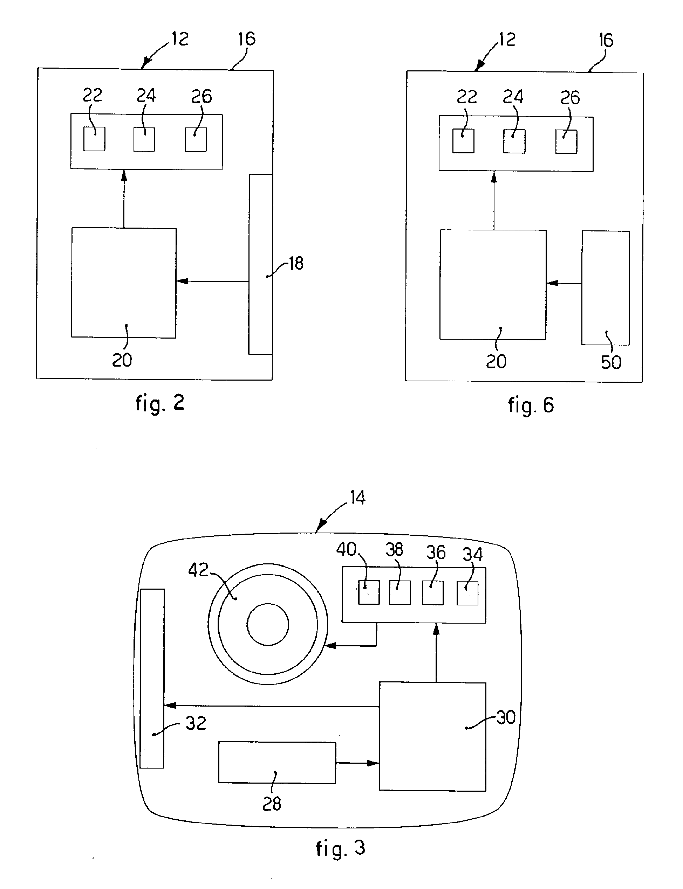

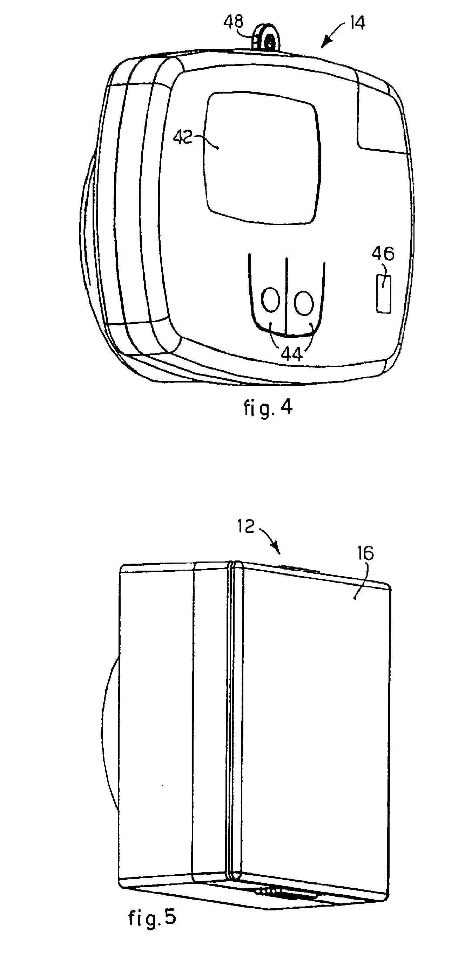

Each fixed transmitter unit 12 comprises (figs. 2 and 5), disposed inside a container 16, advantageously sealed against water and dust:
- a transponder 18;
- a feed circuit 20, connected to the transponder 18;
- an electronic memory 22, in which at least one voice message in compressed format is memorized;
- a transmitter 24, connected to the electronic memory 22, to modulate the voice message;
- an aerial 26, connected to the transmitter 24 in order to transmit the modulated signal.

Each mobile receiver unit 14 comprises (fig. 3):
- a battery 28;
- a feed circuit 30, connected to the battery 28;
- an electromagnetic field generator 32, connected to the feed circuit 30 and able to activate the transponder 18 of the fixed transmitter units 12;
- an aerial 34, to receive the signals transmitted via radio from the fixed transmitter unit 12;
- a receiver 36, to demodulate the signals received;
- a decompressor 38, to decompress the demodulated signals;
- an amplifier 40, to amplify the decompressed signals; and
- a loud speaker 42, connected to the amplifier.

Each mobile receiver unit 14 can also be equipped with an ear-piece or headphones.

Each mobile receiver unit 14 also comprises (fig. 4) a push-button panel 44, for example to control the volume and to switch the mobile unit 14 on and off; a connector 46, through which it is possible to recharge the batteries 28 and transfer by means of a cabled communication interface information or software updates from an external computer; and a hook 48 suitable to allow the user to hook the mobile unit to a belt or pocket.

We shall now describe an example of the functioning of the apparatus 10 according to the present invention.

When the mobile receiver unit 14 approaches a fixed transmitter unit 12, by means of the electromagnetic field generator 32 it activates the transponder 18 of the fixed unit 12 which feeds the feed circuit 20, thus allowing to pick up the message from the memory 22 and transmit it by means of the transmitter 24.

The electromagnetic field generator 32 can be always active, so as to activate on each occasion all the fixed units 12 that the mobile unit 14 meets.

According to a variant, the mobile unit 14 is suitable to selectively activate the field for example by means of pushing a button.

The mobile unit 14 thus receives the voice message and decompresses it.

Given that every voice message has an identification code, the mobile unit 14 verifies the code; if the message identified has not been previously reproduced, then the voice message is reproduced by means of the loud speaker 42; if the message has already been reproduced, then it is not reproduced unless an appropriate replay button on the mobile unit 14 is pressed.

Thanks to the identification code, the messages can be memorized in the memory 22 of the fixed units 14 in several languages and the user can choose the message in the language desired.

In this way, a system is achieved able to diffuse locally, that is, at a maximum distance of about 10 m to 100 m of the fixed unit 12, via radio, useful information regarding specific points of an area that can be listened to by a user by means of the mobile unit 14 which transforms said information into voice messages.

According to the variant shown in fig. 6, each fixed transmitter unit 12 is provided, instead of the transponder, with a battery 50 connected to the feed circuit 20 and able to feed the various components of the unit 12.

According to this variant, the fixed units 12 are suitable to transmit periodically their own voice message, with a ratio between duration of the transmission and period between one transmission and the next comprised between about 1000 and about 5000. Given that the duration of the packets transmitted is several milliseconds, the consumption during the transmission step is in the range of some tens of a milliampere. In these conditions, by using microcontrollers and low-consumption radio devices, the average consumption of the batteries varies from twenty microampere to fifty microampere.

To give an example, by using 1000 mAh batteries and a transmission duty cycle of 1/5000, the battery will have a duration of 25 months, with no need to recharge or replace the battery.

According to this variant, even if the probability that two or more fixed units 12 will transmit at the same instant is not zero, given that the fixed units 12 are suitable to transmit with very low power in order to reduce energy consumption, no interference occurs between the different voice messages transmitted.

According to one solution of the invention, the fixed units 12 are provided with a battery 50 of the rechargeable type and with a photovoltaic panel, not shown, able to keep the battery 50 charged.

According to another variant, each fixed transmitter unit is provided, in addition to the transponder 18, with a battery 50 connected to the feed circuit 20 and able to feed the various components of the unit 12.

In this way, the fixed units 12 are autonomous from the energy point of view, but are activated only when the mobile unit 14 passes, thus further reducing the energy consumption with respect to the previous variant.

It is clear that modifications and/or additions of parts and/or steps may be made to the apparatus 10 and method as described heretofore, without departing from the field and scope of the present invention.

It is also clear that, although the present invention has been described with reference to some specific examples, a person of skill in the art shall certainly be able to achieve many other equivalent forms of apparatus and method for the diffusion of voice messages relating to sites, such as museums, parks, places of public interest, etc.,, having the characteristics as set forth in the claims and hence all coming within the field of protection defined thereby.

## Claims

1. Apparatus for the diffusion of voice messages relating to sites, such as museums, parks, places of public interest etc., comprising:
- one or more fixed transmitter units (12) each provided with respective electronic memorization means (22), in which a corresponding voice message is memorized and each suitable to transmit the respective voice message, wherein said respective voice message refers to the site in which the corresponding fixed transmitter unit (12) is disposed; and
- one or more mobile receiver units (14) each suitable to receive at least a voice message from a respective fixed transmitter unit (12),
**characterized in that** each of said fixed transmitter units (12) is pre-disposed so that the corresponding voice message is memorized in the respective electronic memorization means (22) in compressed form, and **in that** each of said mobile receiver units (14) is provided with decompression means (38) able to decompress the voice message received so as to obtain a message reproducible in a manner comprehensible and intelligible to the user.

2. Apparatus as in claim 1, **characterized in that** each of said fixed transmitter units (12) comprises at least a transponder (18), and **in that** each of said mobile receiver units (14) comprises means to generate an electromagnetic field (32), which in proximity with said transponder (18) is suitable to activate the transmission of the relative voice message by the fixed transmitter unit (12).

3. Apparatus as in claim 2, **characterized in that** by means of said transponder (18), said means to generate an electromagnetic field (32) is able to supply electric energy to the components of the respective fixed transmitter unit (12).

4. Apparatus as in claim 1, **characterized in that** each of said fixed transmitter units (12) comprises feed means (50) and transmission means (24) selectively fed by said feed means (50) in order to transmit said voice message at determinate periods.

5. Apparatus as in claim 4, **characterized in that** the ratio between the duration of the transmission of said voice message and the period between one transmission and the next transmission is comprised between about 100 and about 10000.

6. Apparatus as in claim 4, **characterized in that** the ratio between the duration of the transmission of said voice message and the period between one transmission and the next transmission is comprised between about 1000 and about 5000.

7. Apparatus as in any claim hereinbefore, **characterized in that** said voice messages are compressed in adaptive mode.

8. Apparatus as in any claim from 1 to 6, **characterized in that** said voice messages are compressed by means of a voice encoder.

9. Apparatus as in any claim from 1 to 6, **characterized in that** said voice messages are compressed using an MPEG protocol.

10. Apparatus as in any claim from 1 to 6, **characterized in that** said voice messages are compressed using an MP3 protocol.

11. Method for the diffusion of voice messages relating to sites, such as museums, parks, places of public interest etc., by means of one or more fixed transmitter units (12) each provided with respective electronic memorization means (22), in which a corresponding voice message is memorized and each suitable to transmit the respective voice message, wherein said respective voice message refers to the site in which the corresponding fixed transmitter unit (12) is disposed; and by means of one or more mobile receiver units (14) each suitable to receive at least a voice message from a respective fixed transmitter unit (12), **characterized in that** each voice message is memorized in compressed form in the respective electronic memorization means (22) of each of said fixed transmitter units (12), and **in that** the voice message received by each of said mobile receiver units (14) is decompressed by means of decompression means (38) so as to obtain a message reproducible in a manner comprehensible and intelligible to the user.
